Europäisches Patentamt

European Patent Office

Office européen des brevets

(11) Veröffentlichungsnummer : **0 572 491 B1**

(12) **EUROPÄISCHE PATENTSCHRIFT**

(45) Veröffentlichungstag der Patentschrift :
19.04.95 Patentblatt 95/16

(51) Int. Cl.⁶ : **H02M 3/156**

(21) Anmeldenummer : 92905445.0

(22) Anmeldetag : 21.02.92

(86) Internationale Anmeldenummer :
PCT/DE92/00135

(87) Internationale Veröffentlichungsnummer :
WO 92/15145 03.09.92 Gazette 92/23

(54) **STEUERVERFAHREN FÜR EINEN SPANNUNGSWANDLER MIT GROSSEM EINGANGSSPANNUNGSBEREICH UND DIE VERWENDUNG EINES SOLCHEN VERFAHRENS.**

(30) Priorität : 21.02.91 DE 4105463

(43) Veröffentlichungstag der Anmeldung :
08.12.93 Patentblatt 93/49

(45) Bekanntmachung des Hinweises auf die
Patenterteilung :
19.04.95 Patentblatt 95/16

(84) Benannte Vertragsstaaten :
AT DE FR GB IT

(56) Entgegenhaltungen :
WO-A-89/11691
CH-A- 415 820
DE-A- 2 708 882
US-A- 4 386 394
US-A- 4 677 366

(56) Entgegenhaltungen :
SIEMENS COMPONENTS, Bd. XXI, Nr. 3, Juni
1986, München, DE, Seiten 103-107 ; M. Herfurth : "TDA 4814 4814 - Integrated Circuit for
Sinusoidal Line Current Consumption"
PESC'89 RECORD, vol. II, Juni 1989, Milwaukee, WI, USA, Seiten 959-967 ; James B. Williams : "Design of Feedback Loop in Unity
Power Factor AC to DC Converter"

(73) Patentinhaber : SIEMENS
AKTIENGESELLSCHAFT
Wittelsbacherplatz 2
D-80333 München (DE)

(72) Erfinder : HERFURTH, Michael
Ludwig-Thoma-Str. 22
D-8031 Gilching (DE)
Erfinder : BICHLER, Helmut
Bahnhofstr. 103
D-8032 Gräfelfing (DE)

EP 0 572 491 B1

**Beschreibung**

Zur Verbesserung des Leistungsfaktors bei der Netzgleichrichtung können Wandler, wie z.B. Sperrwandler, Hochsetzsteller oder Hochtiefsetzsteller eingesetzt werden. Diese Wandler sind prinzipiell in der Lage, eine Eingangsspannung stufenlos zu transformieren und eine geregelte Ausgangsspannung bereitzustellen. Bei geeigneter Steuerung eines solchen Wandlers ist es möglich, im Zusammenwirken mit einem Netzgleichrichter einem Wechselspannungsnetz einen sinusförmigen Strom zu entnehmen und am Ausgang eine geregelte Gleichspannung bereitzustellen. Hochsetzsteller mit diesen Eigenschaften sind beispielsweise in folgenden Artikeln oder Anwendungsberichten von M. Herfurth bekannt:

"Aktive Oberwellenfilterung für Netzgleichrichter höherer Ausgangsleistung", Siemens Components 24 (1986) Heft 1, Seite 9 bis 13;

"TDA 4814 - Integrierte Steuerschaltung für sinusförmige Netzstromaufnahme", Siemens Components 24 (1986) Heft 3, S. 103 - 107;

"Aktive Oberschwingungsfilter mit TDA 4814 A für 250 W Ausgangsleistung", Siemens-Bericht LE8803 vom 19.08.1988;

"Steuerschaltung mit TDA 4816 und TDA 4919 für ein aktives Oberschwingungsfilter", Siemens HL-Anwendungsbericht PD22 8905, November 1989 und

"Aktives Oberschwingungsfilter mit konstanter Betriebsfrequenz und 600 W Ausgangsleistung", Siemens HL-Anwendungsbericht PD22 9002 von Februar 1990.

Das Steuerprinzip dieser bekannten Schaltungsanordnung sieht einen Regelverstärker vor, dessen Istwerteingang mit einem von der Ausgangsspannung des Wandlers abhängigen Signal beaufschlagt ist, das mit einem Sollwert dieser Ausgangsspannung verglichen wird und dessen Ausgangsgröße eine der Eingangsgrößen eines Multiplizierers bildet. Die andere Eingangsgröße dieses Multiplizierers ist ein zeitabhängiges Analogsignal, das proportional zur gleichgerichteten Eingangsspannung des Spannungswandlers ist. Da im eingeschwungenen Zustand der Regelverstärker als Ausgangsgröße eine Gleichspannung bereitstellt, stellt der Multiplizierer an seinem Ausgang ein Signal bereit, dessen zeitabhängiger Verlauf durch die gleichgerichtete Eingangsspannung des Spannungswandlers festgelegt ist und dessen Amplitude durch die Ausgangsgröße des Regelverstärkers festgelegt ist. Dieses Ausgangssignal des Multiplizierers bildet die Sollwertvorgabe für den Eingangsstrom des Wandlers, also den aufgenommenen Netzstrom. Eine dem Multiplizierer nachgeschaltete Schaltungsanordnung liefert in Abhängigkeit von dieser Sollwertvorgabe des Wandlereingangsstromes und in Abhängigkeit vom tatsächlichen Verlauf des Wandlereingangsstromes Ansteuerimpulse für den bzw. die Leistungsschalter des Wandlers. Die Ausbildung dieser Schaltungsanordnung ist in erster Linie abhängig vom Wandlertyp. Eine einfache Möglichkeit zur Ansteuerung eines getakteten Hochsetzstellers ist in dem oben beschriebenen Artikel "TDA 4814 - Integrierte Steuerschaltung für sinusförmige Netzstromaufnahme" beschrieben, wobei lediglich ein Komparator eine dem Eingangsstrom des Wandlers proportionale Spannung mit der Sollwertvorgabe des Multiplizierers vergleicht und bei Erreichen eines dem Sollwert entsprechenden Scheitelwertes den Leistungsschalter des Wandlers abschaltet und wobei der Leistungsschalter wieder eingeschaltet wird, sobald ein Nulldurchgangsdetektor feststellt, daß der Eingangsstrom des Wandlers zu Null geworden ist.

Eine weitere Möglichkeit, die Sollwertvorgabe eines Multipliziererausganges einer oben beschriebenen Steuerschaltung in Ansteuerimpulse für Leistungsschalter eines Wandlers umzuformen ist darin zu sehen, daß dem Multiplizierer ein weiterer Regler nachgeschaltet ist, der den Istwert des Eingangsstromes des Wandlers dem vom Multiplizierer vorgegebenen Sollwert nachregelt und entweder ein Analogsignal oder ein von einem Pulsweitenmodulator bereitgestelltes getaktetes Signal zur Ansteuerung des bzw. der Leistungsschalter eines Wandlers bereitstellt. Eine Anordnung, di nach einem solchen Verfahren arbeitet, ist u.a. aus dem auch als Sonderdruck erschienenen Artikel "Aktive Oberwellenfilterung für Netzgleichrichter höherer Ausgangsleistung" von M. Herfurth, erschienen in Siemens Components 24 (1986), Heft 1, Seiten 9 bis 13 sowie aus dem HL-Anwendungsbericht PD22 8905 der Firma Siemens mit dem Titel "Steuerschaltung mit TDA 4816 und TDA 4919 für ein aktives Oberschwingungsfilter" von M. Herfurth beschrieben.

Allen oben beschriebenen Spannungswandlern gemeinsam ist ein Steuerverfahren mit einem Multiplizierer, dessen Ausgangssignal den Referenzwert für einen Stromkomparator oder Stromregler bereitstellt, wobei dieser Stromkomparator oder Stromregler den Eingangsstrom des Spannungswandlers steuert. An einem der Eingänge des Multiplizierers liegt die über einen Spannungsteiler in ihrer Amplitude reduzierte Eingangsspannung des Wandlers an und an dem anderen Eingang des Multiplizierers liegt die Ausgangsspannung eines Spannungsreglers an, der die Ausgangsspannung des Wandlers regelt. Somit wird am Ausgang des Multiplizierers ein Signal bereitgestellt, das die Kurvenform der gleichgerichteten Netzspannung aufweist und dessen Amplitude durch den Spannungsregler veränderbar ist.

Da die beschriebenen Wandler eine Eingangsspannung stufenlos und mit hohem Wirkungsgrad auf ein anderes Spannungsniveau transformieren können, liegt es nahe, diese Wandler auch zu verwenden, um eine Last sowohl aus einem 110 V-Netz als auch aus einem 220 V-Netz zu speisen, ohne daß weitere Umschaltmaßnahmen erforderlich sind. Dies ist mit den beschriebenen Wandlern, die nach dem beschriebenen Steuerverfahren arbeiten, möglich.

Schaltungsbedingt weisen Multipliziererschaltungen bezüglich ihrer Signaleingänge einen eingeschränkten Dynamikbereich auf. Um einen bestimmten Ausgangspegel am Multiplizierer zu erhalten, darf der Eingangspegel an keinem der Signaleingänge des Multiplizierers unter einen bestimmten Wert abfallen. Außerdem darf der Eingangssignalpegel an keinem der Eingänge einen eingangsspezifischen Wert überschreiten, damit das Ausgangssignal der Multipliziererschaltung in gewünschter Weise vom Eingangssignal abhängt. Dieser eingeschränkte Dynamikbereich einer Multipliziererschaltung schränkt somit auch in Spannungswandlerschaltungen, in denen das obengenannte Steuerverfahren verwirklicht ist, den zulässigen Eingangsspannungsbereich bzw. den Quotienten aus maximal zulässiger Eingangsspannung und minimal zulässiger Eingangsspannung ein. Um einen gewünschten Sollwert am Ausgang des Multiplizierers bereitzustellen, darf nämlich, ei fester maximal zulässiger Eingangsspannung, die Eingangsspannung des Spannungswandlers nicht so klein werden, daß das hiervon abgeleitete Eingangssignal des Muliplizierers einen bestimmten Wert unterschreiter und außerdem darf die Eingangsspannung des Spannungswandlers nur so klein werden, daß zur Bereitstellung eines gewünschten Sollwertpegels am Ausgang des Multiplizierers die von dem Spannungsregler bereitgestellte Spannung am Eingang des Multiplizierers einen zulässigen Wert nicht überschreitet.

Aus der US 4 667 366 ist eiin Spannungswandler mit verbessertem Leistungsfaktor bekannt, der einen Multiplizierer verwendet, die für die Stromsollwertvergabe ein Signal bilden, das aus dem Fehlerausgangssignal multipliziert mit der Eingangsspannung und dividiert durch den quadrierten Effektivwert der Eingangsspannung besteht.

Aufgabe der Erfindung ist das Bereitstellen eines einfacheren Steuerverfahrens für Spannungswandler mit großem Eingangsspannungsbereich, bei dem der Eingansspannungsbereich nicht so sehr durch das Übertragungsverhalten eines Multiplizierers eingeschränkt wird sowie die Verwendung eines solchen Steuerverfahrens.

Diese Aufgabe wird gelöst durch ein Steuerverfahren nach dem Patentanspruch 1.

Die Verwendung eines solchen Steuerverfahrens ist Gegenstand der Patentansprüche 2 bis 4.

Die Erfindung löst das Problem in der Weise, daß der Multiplizierer um eine Division durch eine der Eingangsspannung proportionale Gleichspannung erweitert wird. Bei dieser zur Eingangsspannung proportionalen Gleichspannung kann es sich beispielsweise um den Scheitelwert der Eingangsspannung, um den zeitlichen Mittelwert der Eingangsspannung oder um den Effektivwert der Eingangsspannung handeln. Auf diese Weise wird die maximale Sollwertvorgabe für den Eingangsstrom des Spannungswandlers unabhängig von der Höhe der Eingangsspannung.

Zur Durchführung des Verfahrens kann einem bekannten Multiplizierer ein weiterer Multiplizierer vorangeschaltet werden, wobei ein Eingangssignal dieses vorangeschalteten Multiplizierers von der gleichgerichteten Eingangsspannung des Spannungswandlers hergeleitet ist und am anderen Eingang dieses vorgeschalteten Multiplizierers eine Gleichspannung anliegt, die umgekehrt proportional zur Eingangsspannung des Spannungswandlers, beispielsweise umgekehrt proportional zum Scheitelwert, zum Effektivwert oder zum Mittelwert der Eingangsspannung ist.

Als Realisierungsmöglichkeit eines Steuerverfahrens nach dem Patentanspruch eignet sich jedoch irgend eine Ausgestaltung eines Multiplizierers mit drei Eingängen, wobei ein Eingang mit dem Ausgangssignal eines Spannungsreglers beaufschlagt wird, ein Eingang mit einer Gleichspannung, die umgekehrt proportional zum Scheitelwert, Effektivwert oder Mittelwert der Eingangsspannung des Spannungswandlers ist, beaufschlagt wird und der dritte Eingang mit einem zeitabhängigen Signal beaufschlagt wird, das proportional zur gleichgerichteten Eingangsspannung des Spannungswandlers ist. Im Gegensatz zu dem bekannten Steuerverfahren verteilt sich bei solchen erfindungsgemäßen Steuerverfahren der notwendige Regeleingriff der Steuerung bei Änderung der Eingangsspannung gleichmäßig auf alle drei Eingänge des Multiplizierers, wodurch sich der zu verarbeitende Signalbereich deutlich verringert. Die Strombelastung der Bauelemente des Wandlers richtet sich nach dem Eingangsstrom, der im Grenzfall bei diesem Steuerverfahren konstant bleibt. Das bedeutet, daß der Wandler bei höheren Eingangsspannungen bei Bedarf mehr Leistung abzugeben vermag, wobei sich die Belastung der Bauelemente nicht ändert. Ein derart gesteuerter Wandler verfügt mit zunehmender Eingangsspannung bei optimaler Ausnutzung der Bauelemente über eine größere Stellreserve.

Im folgenden wird die Erfindung anhand der Figur näher erläutert. Die Figur zeigt als Ausführungsbeispiel einen Hochsetzsteller, bestehend aus einer Gleichrichteranordnung GR mit Eingangsklemmen a und b, die mit einer Wechselspannung uac beaufschlagt sind. An Ausgangsklemmen c und d stellt diese Gleichrichteranordnung GR eine gleichgerichtete Spannung mit periodisch schwankendem Momentanwert bereit. Mit der das positive Potential bereitstellenden Ausgangsklemme c der Gleichrichteranordnung GR ist ein Anschluß eines Leistungsschalters LS sowie der Kathodenanschluß einer Diode Gl verbunden. Der Anodenanschluß der Diode Gl bildet die Ausgangsklemme e des Hochsetzstellers und ist über einen Ladekondensator CL mit einer Ausgangsklemme f des Hochsetzstellers verbunden. Die Ausgangsklemme f des Hochsetzstellers ist außerdem mit dem anderen Anschluß des Leistungsschalters LS zusammengeschaltet und über einen zur Erfassung des Laststromes vorgesehenen Widerstand R1 mit der Ausgangsklemme d der Gleichrichteranordnung GR verbunden. Der beschriebene Hochsetzsteller stellt zwischen den Ausgangsklemmen e und f eine Gleichspannung Ua bereit. Die Klemme e ist über die Serienschaltung zweier Widerstände R2 und R3 gegen Bezugspotential Masse geschaltet. Der Verbindungspunkt dieser beiden Widerstände R1 und R3 stellt eine zur Ausgangsspannung Ua proportionale Spannung bereit und ist an einen Eingang eines Spannungsreglers RU geschaltet. Der andere Eingang dieses Spannungsreglers RU ist mit einem Referenzpotential Uref beaufschlagt. Der Spannungsregler RU vergleicht die Ausgangsspannung Ua des Hochsetzstellers mit der Referenzspannung Uref und gibt bei Abweichung der Ausgangsspannung Ua von einem vorgegebenen Sollwert eine geeignete Spannung M3 an einen Eingang einer Multipliziereranordnung M. Die das positive Potential der Spannung Ue bereitstellende Klemme c ist über die Serienschaltung zweier Widerstände R4 und R5 sowie über die Serienschaltung zweier Widerstände R6 und R7 jeweils gegen Bezugspotential Masse geschaltet. Parallel zu dem Widerstand R7 ist eine Kapazität C7 vorgesehen. An dem Verbindungsknoten zwischen den Widerständen R4 und R5 wird eine Spannung M1 bereitgestellt, die proportional zum Momentanwert der Spannung Ue ist. An dem Verbindungsknoten der Widerstände R6 und R7 sowie der Kapazität C7 wird eine Spannung M2 bereitgestellt, die aufgrund der integrierenden Wirkung der Kapazität C7 proportional zum arithmetischen Mittelwert der Spannung Ue und somit auch proportional zum Effektivwert bzw. proportional zum Scheitelwert der Eingangsspannung uac ist. Sowohl der Verbindungsknoten der Widerstände R4 und R5 als auch der Verbindungsknoten der Widerstände R6 und R7 sind jeweils mit einem Eingang der Multipliziereranordnung M verbunden. Die Multipliziereranordnung M muß dergestalt realisiert sein, daß sie ein Ausgangssignal Q bereitstellt, für das gilt:

$$Q = \frac{M1 \times M3}{M2}.$$

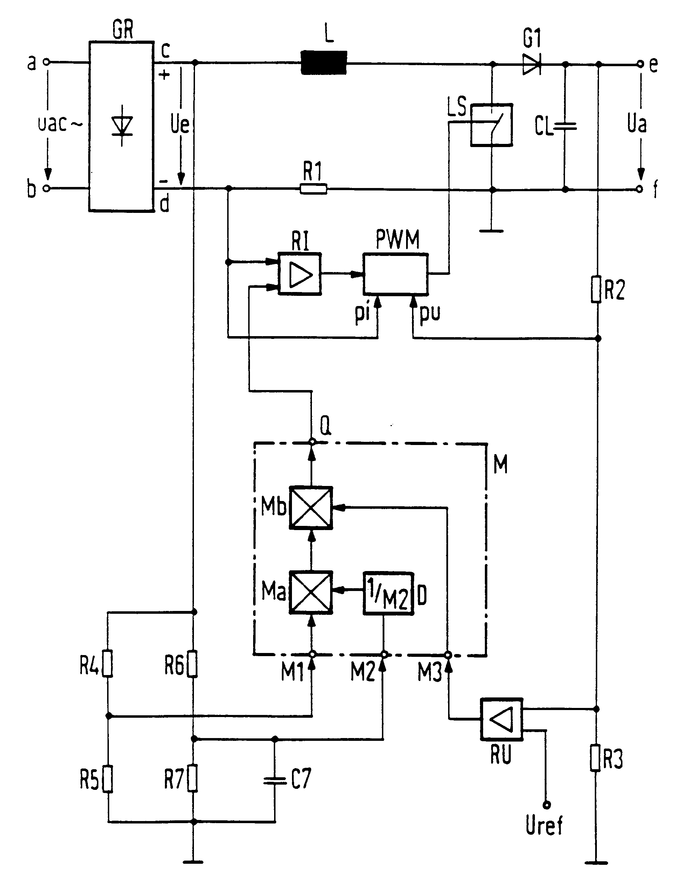

Eine solche Multipliziereranordnung ist u.a. durch zwei übliche Multipliziererschaltungen realisierbar, wobei der mit der Spannung M2 beaufschlagte Eingang invertierend ausgeführt ist bzw. einer analoge Invertierschaltung vorgeschaltet ist. Hierzu verwendbare Multiplizierergrundschaltungen sind u.a. in Tietze/Schenk, Halbleiterschaltungstechnik, 2. Aufl. 1971 im Kapitel 11.16.2 auf den Seiten 288 bis 293 beschrieben. Insbesondere Abbildung 11.115 zeigt hierbei eine Differenzverstärkerschaltung aus zwei Transistoren, deren Emitteranschlüsse zusammengeschaltet sind und über einen Widerstand R2 an ein Potential U2 geschaltet sind. Der Basisanschluß eines der Transistoren ist gegen Massepotential geschaltet, der Basisanschluß des anderen Transistors der Differenzverstärkerschaltung ist mit einer Spannung ul beaufschlagt. Die Kollektoranschlüsse der beiden Transistoren sind an die beiden Eingänge eines als invertierender Proportionalverstärker geschalteten Operationsverstärkers angeschlossen. Der Ausgang dieses Operationsverstärkers stellt eine Spannung bereit, die proportional zur Spannung ul an dem Basisanschluß eines Transistors multipliziert mit dem gemeinsamen Emitterstrom beider Transistoren und aufgrund des Widerstandes R2 somit mit der Spannung u2 ist. Auf Seite 290 dieses Buches ist eine Multipliziererschaltung beschrieben, deren Ausgangsspannung proportional zu dem Quotienten aus zwei Eingangsspannungen ist. Hierzu muß in der Schaltung nach Abbildung 11.115 auf Seite 289 die Rückkopplung des Operationsverstärkers nicht an den invertierenden Eingang dieses Operationsverstärkers sondern an den Stromeingang des Differenzverstärkers, also die Klemme mit der Spannung u2, rückgekoppelt werden.

Zur Realisierung der Multipliziererschaltung M nach der Figur kann also der mit der Spannung M2 beaufschlagte Eingang an eine Schaltungsanordnung D angeschlossen sein, die ein Ausgangssignal liefert, das proportional zum Kehrwert des Eingangssignales ist. Der Ausgang dieser Schaltungsanordnung D kann an einen Eingang einer üblichen Multipliziereranordnung Ma geschaltet sein, deren anderer Eingang mit dem Eingang der Multipliziereranordnung M verbunden ist, die mit der Spannung M1 beaufschlagt ist. Der Ausgang des Multiplizierers Ma kann an einen Eingang eines weiteren Multiplizierers Mb geschaltet sein. Der weitere Eingang des weiteren Multiplizierers Mb ist dann mit dem Eingang der Multipliziereranordnung M verbunden, der mit der Spannung M3 beaufschlagt ist. Der Ausgang des weiteren Multiplizierers Mb bildet den Ausgang Q der Multipliziereranordnung M. Die Elemente Ma und D einer solchen Realisierungsvariante können durch einen zuvor beschriebenen Multiplizierer realisiert sein, dessen Ausgangssignal proportional zum Quotienten der beiden Eingangssignale ist.

Der Ausgang Q der Multipliziereranordnung M in der Figur ist mit einem Eingang eines Stromreglers RI verbunden. Der andere Eingang dieses Stromreglers RI ist hierbei mit einer Spannung beaufschlagt, die proportional zum momentanen Eingangsstrom des Hochsetzstellers ist. Hierzu ist dieser Eingang mit der Klemme d der Gleichrichteranordnung GR verbunden, die über den Widerstand R1 mit Massepotential verbunden ist. Da der Eingangsstrom des Hochsetzstellers durch den Widerstand R1 fließt, ist die Spannung zwischen der Klemme d und dem Masse-potential proportional zum Laststrom.

Der Ausgang des Stromreglers RI ist an den Eingang einer Pulsweitenmodulatorschaltung geschaltet. Der Ausgang dieser Pulsweitenmodulatorschaltung ist an den Steuereingang des Lastschalters LS geschaltet.

In dem Ausführungsbeispiel nach der Figur ist vorgesehen, daß die Pulsweitenmodulatorschaltung PWM außerdem Schutzfunktionen bezüglich einer zu hohen Ausgangsspannung und einem zu hohen Eingangsstrom des Hochsetzstellers enthält. Dies ist dadurch dargestellt, daß ein dem Eingangsstrom proportionales Signal an einen Eingang pi der Pulsweitenmodulatorschaltung PWM geschaltet ist und daß ein der Ausgangsspannung Ua proportionales Signal an einen Eingang pu der Pulsweitenmodulatorschaltung PWM geschaltet ist.

Das beschriebene Steuerverfahren eignet sich besonders zur Verwendung in getakteten Spannungswandlern wie z.B. Sperrwandler, Hochsetzsteller oder Hoch-Tiefsetzsteller. In dem Buch "Schaltnetzteile, Konzepte, Bauelemente, Anwendungen" von W. Hirschmann und A. Hauenstein, hrsg. 1990 von der Siemens Aktiengesellschaft, Berlin und München, sind auf Seite 40 ff. Schaltnetzteilgrundschaltungen beschrieben. Auf den Seiten 40 und 41 wird hierbei ein Abwärtsregler bzw. Tiefsetzsteller beschrieben, auf Seite 42 ein Aufwärtsregler bzw. Hochsetzsteller, auf Seite 43 ein Inverter bzw. Polwender, auf Seite 44 ein Aufwärts-Abwärtsregler bzw. Hoch-Tiefsetzsteller und auf den Seiten 45 bis 50 verschiedene Sperrwandlergrundschaltungen.

Schaltnetzteilschaltungen für sinusförmige Netzstromaufnahme sind in Kapitel 6 auf den Seiten 436 bis 448 beschrieben.

Die vom Fachmann aus allen zitierten Literaturstellen entnehmbare technische Lehre ist Teil der Offenbarung der vorliegenden Erfindungsbeschreibung.

## Patentansprüche

1. Steuerverfahren für einen getakteten Spannungswandler für sinusförmige Netzstromaufnahme mit großem Eingangsspannungsbereich ($U_e$), bei dem der Eingangsstrom des Spannungswandlers in Abhängigkeit von einem Stromsollwert gesteuert oder geregelt wird, wobei die Ausgangsspannung ($U_a$) des Spannungswandlers als Istwert-Eingangsgröße eines Reglers (RV) vorgesehen ist, der in Abhängigkeit von einem Ausgangsspannungssollwert ein Regelsignal (M3) bereitstellt, **dadurch gekennzeichnet**, daß der besagte Stromsollwert durch die Multiplikation eines der gleichgerichteten des Spannungswandlers proportionalen Signales (M1) mit dem genannten Regelsignal (M3) und außerdem mit einem Gleichspannungssignal (M2), das umgekehrt proportional zum Sckiltelwert, zum Effektivwert oder zum Mittelwert der Eingangsspannung ($U_e$) des Spannungswandler ist, gewonnen wird.

2. Verwendung eines Verfahrens nach Anspruch 1 in einem Sperrwandler.

3. Verwendung eines Verfahrens nach ANspruch 1 in einem Hochsetzsteller.

4. Verwendung eines Verfahrens nach Anspruch 1 in einem Hoch-Tiefsetzsteller.

## Claims

1. Control method for a clocked voltage converter for sinusoidal mains current consumption having a large input voltage range ($U_e$), in which the input current of the voltage converter is controlled or regulated as a function of a desired current value, the output voltage ($U_a$) of the voltage converter being provided as actual value input variable of a regulator (RV) which provides a regulating signal (M3) as a function of an output voltage desired value, characterized in that said desired current value is obtained by the multiplication of a signal (M1), which is in proportion to the rectified input voltage of the voltage converter, with the mentioned regulating signal (M3) and, in addition, with a DC signal (M2) which is inversely proportional to the peak value, to the root-mean-square-value or to the mean value of the input voltage ($U_e$) of the voltage converter.

2. Use of a method according to Claim 1 in a flyback converter.

3. Use of a method according to Claim 1 in a step-up converter.

4. Use of a method according to Claim 1 in a step-up/down converter.

## Revendications

1. Procédé de commande pour un transformateur de tension cadencé consommant un courant sinusoïdal d'un secteur et ayant une gamme large ($U_e$) de tension d'entrée, dans lequel on commande ou l'on règle le courant d'entrée du transformateur de tension en fonction d'une valeur de consigne du courant, la tension ($U_a$) de sortie du

convertisseur de tension étant prévue en tant que grandeur d'entrée réelle d'un régulateur (RV), qui prépare en fonction d'une valeur de consigne de tension de sortie un signal (M3) de régulation, caractérisé en ce que l'on obtient ladite valeur de consigne de courant en multipliant un signal (M1) proportionnel à celui redressé du transformateur de tension, par ledit signal (M3) de régulation et en outre par un signal (M2) de tension continue, qui est inversement proportionnel à la valeur de crête, à la valeur efficace ou à la valeur moyenne de la tension (Ue) d'entrée du transformateur de tension.

2. Utilisation d'un procédé suivant la revendication 1 dans un convertisseur à oscillateur bloqué.

3. Utilisation d'un procédé suivant la revendication 1 dans un montage survolteur.

4. Utilisation d'un procédé suivant la revendication 1 dans un montage survolteur-dévolteur.